# EUROPÄISCHE PATENTSCHRIFT

(11) **EP 0 553 415 B1**
(45) Veröffentlichungstag und Bekanntmachung des Hinweises auf die Patenterteilung: **09.08.1995**
(21) Anmeldenummer: 92119244.9
(22) Anmeldetag: 11.11.1992
(51) Int. Cl.: B60R 13/04, B62D 25/07, B60R 9/058

(54) **Abdeckleiste für eine in ein Fahrzeugdach eingelassene Rinne**
Cover strip assembly for a vehicle roof rack channel
Baguette couvre-joint pour une gouttière encastrée dans un toit de véhicule

(30) Priorität: 30.01.1992 DE 4202495
(43) Veröffentlichungstag der Anmeldung: 04.08.1993
(73) Patentinhaber: SCHADE KG, D-58815 Plettenberg (DE)
(72) Erfinder: Strunk, Harald, W-5970 Plettenberg (DE); Lohmann, Horst, W-5768 Sundern (DE)

(56) Entgegenhaltungen:
- DE-A- 3 313 327
- DE-A- 3 328 513
- DE-A- 3 743 941

## Beschreibung

Die vorliegende Erfindung betrifft eine Abdeckleiste für eine in ein Fahrzeugdach eingelassene Rinne zur Aufnahme und Halterung von Stützfüßen eines Dachlastenträgers, welche durch mittels eines Schiebers verschließbare Öffnungen in der Abdeckleiste hindurchgreifen, wobei die der Rinne abgewandte Außenfläche des Schiebers in der Verschlußstellung mit der Außenfläche der Abdeckleiste im wesentlichen flächenbündig abschließt und der Schieber in seiner Öffnungsstellung eine von außen verdeckte Lage unter der Abdeckleiste einnimmt und wobei an der Innenseite des Schiebers Druckfedern zum Andrücken desselben gegen die Abdeckleiste festgelegt sind.

Eine derartige Abdeckleiste ist aus der DE-OS 33 13 327 der Anmelderin bekannt. Der Schieber dieser Abdeckleiste ist aus Kunststoff oder Metall, im Spritzguß- oder Druckgußverfahren hergestellt. Die Festlegung der aus Federstahldraht mit einem relativ kleinen Durchmesser gefertigten Druckfedern ist aufwendig. Ein weiterer Nachteil der in der Praxis bestens bewährten Ausführung ist das erhöhte Gewicht und die daraus sich ergebenden Material- und Fertigungskosten. In der Praxis ist der bekannte Schieber bisher aus Metall im Zinkdruckgußverfahren hergestellt worden. Zur Sicherstellung eines Korrosionsschutzes ist der Schieber dabei pulverbeschichtet. Bei dieser Herstellungsart kann es zu einer verhältnismäßig hohen Ausschußquote kommen. Gewichtsbedingt muß die Federkraft der Druckfedern außerdem relativ groß sein, so daß zur Betätigung des Schiebers eine entsprechend große Kraft notwendig ist. Wegen des hohen Gewichts stellen sich überdies besonders starke und unkontrollierbare Vibrationen während der Fahrt des Fahrzeuges ein.

Der Erfindung liegt deshalb die Aufgabe zugrunde, den Schieber einer Abdeckleiste gemäß dem Oberbegriff des Anspruches 1 so zu gestalten, daß er wesentlich wirtschaftlicher herzustellen ist und darüber hinaus eine verbesserte Handhabung ermöglicht.

Diese Aufgabe wird nach der Erfindung dadurch gelöst, daß der Schieber ein durch Umformen eines Blechzuschnittes gebildetes, einstückiges Preßteil ist und daß in den Endbereichen des Schiebers an der Innenseite im Abstand zur Innenfläche, oder diese kontaktierend, zwei von den Längsseiten aus sich erstreckende Befestigungslaschen für die freien Enden der Druckfedern vorgesehen sind. Da der Schieber nach der Erfindung aus Stahlblech, oder auch beliebigen anderen geeigneten Metallwerkstoffen, von relativ geringer Dicke gefertig wird, ist das Gewicht gegenüber der bekannten Ausführung deutlich verringert worden. Dadurch werden auch die Material- und Fertigungskosten erheblich gesenkt. Die Oberflächengüte wurde ebenfalls wesentlich verbessert, so daß die Ausschußquote bei der späteren Pulverbeschichtung erheblich geringer ist. Außerdem wird die Betätigung des Schiebers durch den sich zwangsläufig einstellenden geringeren Kraftaufwand als bisher vereinfacht. Da es im Zuge des Preßvorganges des Schiebers möglich ist, die Befestigungslaschen für die Druckfedern in einem Arbeitsgang mitzuformen, ergibt sich bei diesen Massenartikeln eine hohe Wirtschaftlichkeit. Die Befestigung der Druckfedern an den Befestigungslaschen ist aufgrund ihrer flächigen Ausbildung besonders einfach.

Zweckmäßig sind die Befestigungslaschen mit Einschnitten versehen, die sich von den einander zugewandten Kanten in Richtung zu den Längskanten des Schiebers erstrecken, sowie parallel und im Abstand zueinander verlaufen, so daß die zwischen den Einschnitten liegenden Materialteile Klemmstege für die Druckfedern bilden.

Damit das Einführen der freien Enden der Druckfedern unter die Klemmstege erleichtert wird, ist nach einem weiteren Merkmal der Erfindung vorgesehen, daß sie bogenförmig ausgebildet sind und gegenüber der Ebene der Befestigungslaschen zu der der Außenseite des Schiebers abgewandten Seite vorstehen. In diesem Fall stehen sie zu der Seite ab, an der die Druckfedern angeordnet sind. Die Druckfedern werden dabei durch die Klemmstege auf wenigstens einen der durch die Einschnitte gebildeten Seitenstege der Befestigungslaschen gedrückt.

Die Erfindung wird nachstehend anhand der beiliegenden Zeichnungen näher erläutert.

In der Zeichnung zeigen:
- Figur 1:: den Schieber der erfindungsgemäßen Abdeckleiste mit Blick auf die Außenseite,
- Figur 2:: den Schieber nach Figur 1 von der Unterseite gesehen,
- Figur 3:: den Schieber nach den Figuren 1 und 2 in einer Seitenansicht,
- Figur 4:: den Schieber in einer Stirnansicht,
- Figur 5:: einen Schnitt längs der Linie V-V in Figur 3,
- Figur 6:: einen Schnitt längs der Linie VI-VI in Figur 3 und
- Figur 7:: einen Schnitt längs der Linie VII-VII in Figur 1.

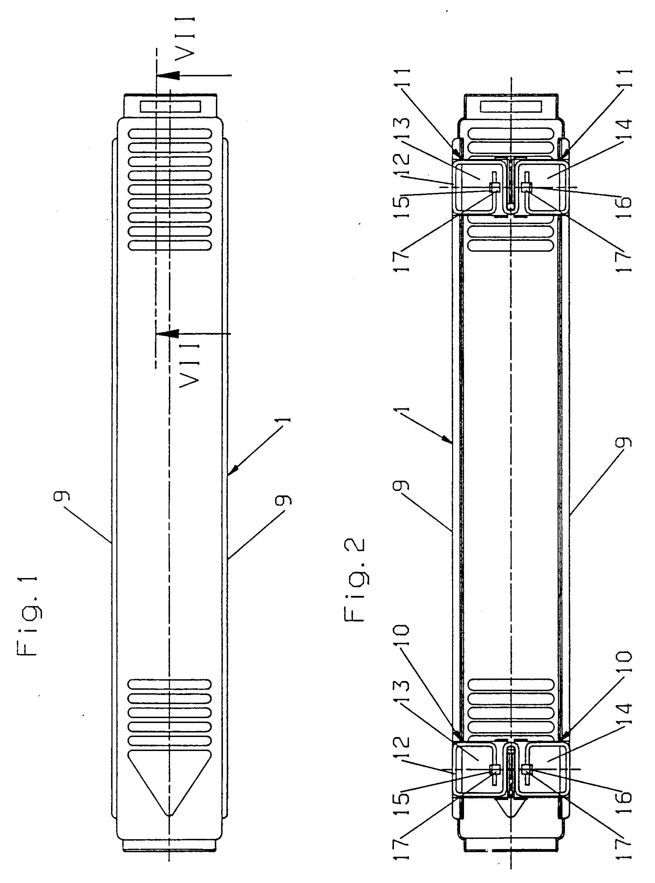

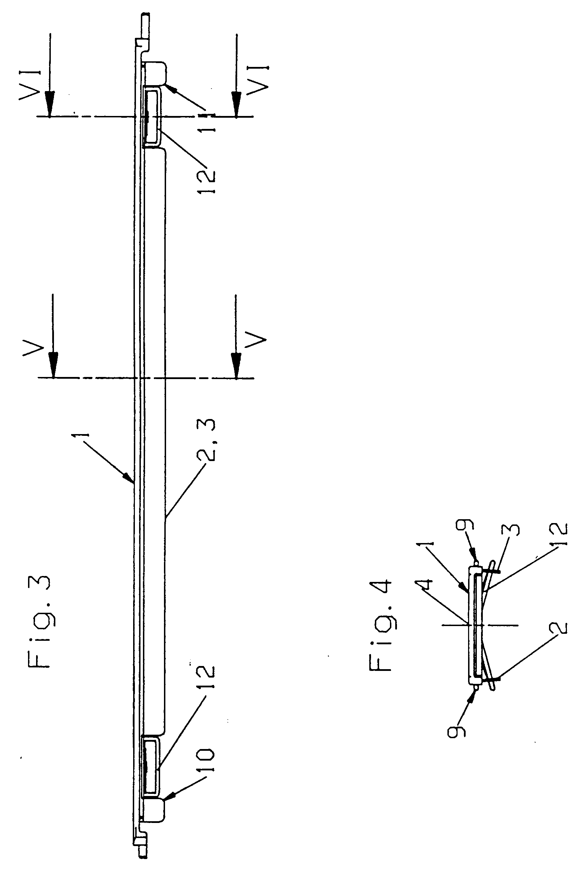

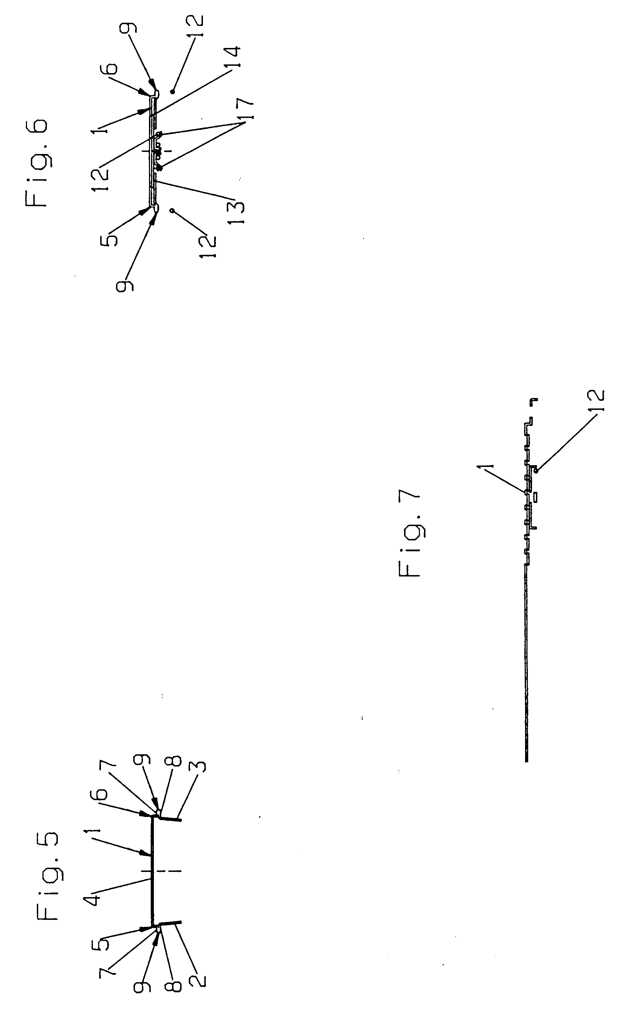

Der in den Figuren 1 - 7 dargestellte Schieber 1 ist aus einem nicht dargestellten Blechzuschnitt gepreßt. Als Werkstoffe kommen Stahl und andere geeignete Metalle und Nichteisenmetalle in Frage. Im Querschnitt ist der Schieber U-förmig ausgebildet, wobei die seitlichen Schenkel 2, 3 wesentlich kürzer sind als der dazwischen liegende Basissteg 4. Wie aus den Figuren 4 - 6 hervorgeht, sind die Längskanten 5, 6 des Schiebers 1 nicht glattflächig, sondern zur Bildung von oberen und unteren Führungsflächen 7, 8 zur Führung an der nicht dargestellten Abdeckleiste eingezogen, so daß in einem relativ geringen Abstand zur Außenfläche ein Führungssteg 9 liegt. Insbesondere die Figuren 3 und 6 zeigen, daß die seitlichen Schenkel 2, 3 im vorderen und hinteren Stirnendbereich des Schiebers 1 mit Öffnungen 10, 11 versehen sind, durch die die Seitenschenkel einer aus Federdraht gefertigten Druckfeder 12 hindurchtritt. An jedem Stirnendbereich ist eine Druckfeder 12 in noch näher erläuterter Weise befestigt, und zwar an der unteren, d.h. im eingebauten Zustand der der Rinne zugewandten Seite. Jede Druckfeder 12 ist einstückig in der Form von zwei Quadraten gestaltet, die durch ein mittleres U-förmiges Verbindungsteil verbunden sind. Dabei liegen die freien Enden dem mittleren Verbindungsteil zugewandt und parallel zu den Längskanten 5, 6 des Schiebers 1.

Die zur Bildung der Öffnungen 10, 11 ausgeklinkten Materialteile sind nach innen umgebogen, d.h. aufeinander zugerichtet, wie besonders deutlich aus der Figur 6 erkennbar ist. Dadurch werden Befestigungslaschen 13, 14 für die beiden freien Enden der Druckfedern 12 gebildet. Die aufeinander zugerichteten, parallel zu den Längskanten 5, 6 des Schiebers 1 verlaufenden Kanten der Befestigungslaschen 13, 14 liegen in einem geringen Abstand zueinander. Die Befestigungslaschen 13, 14 sind mit zwei im Abstand und parallel zueinander angeordneten, quer zu den Längskanten 5, 6 des Schiebers verlaufenden Einschnitten 15, 16 versehen. Das zwischen den Einschnitten 15, 16 jeder Befestigungslasche 13, 14 liegende Material bildet einen Klemmsteg 17 für ein Ende der Druckfeder 12. Die außerhalb jedes Klemmsteges 17 liegenden Materialteile der jeweiligen Druckfeder stützen sich auf den seitlichen Stegen der Befestigungslaschen 13, 14 ab. Damit die Enden. der Druckfedern 12 besonders leicht unter die Klemmstege 17 gebracht werden können, sind die Klemmstege 17 bogenförmig gestaltet. Sie stehen gegenüber der Ebene der Befestigungslaschen 13, 14 vor und zwar zu der der Außenfläche des Schiebers 1 abgewandten Seite. Durch diese Art der Festlegung entfallen zusätzliche Befestigungselemente.

Besonders die Figur 5 zeigt den U-förmigen Querschnitt des Schiebers 1 zur Aufnahme der Druckfedern, wobei die seitlichen Schenkel 2, 3 vom mittleren Basissteg 2, 3 aus gesehen, konvergierend zueinander stehen.

Die Figur 6 zeigt die Festlegung der freien Enden der Druckfedern 12 durch die bogenförmig gestalteten Klemmstege 17. Außerdem ist der mittlere Basissteg des Schiebers 1 im Bereich der Druckfedern 12 eingezogen.

Aus der Figur 7 in Verbindung mit Figur 1 geht hervor, daß der Schieber 1 in beiden Endbereichen - im Längsschnitt gesehen - mäanderförmig gestaltet ist, um eine profilierte Fläche für die bessere Betätigung zu erhalten.
- 1: Schieber
- 2: Schenkel seitlich
- 3: Schenkel seitlich
- 4: Basissteg
- 5: Längskante
- 6: Längskante
- 7: Führungsfläche
- 8: Führungsfläche
- g: Führungssteg
- 10: Öffnung
- 11: Öffnung
- 12: Druckfeder
- 13: Befestigungslasche
- 14: Befestigungslasche
- 15: Einschnitt
- 16: Einschnitt
- 17: Klemmsteg

## Patentansprüche

1. Abdeckleiste für eine in ein Fahrzeugdach eingelassene Rinne zur Aufnahme und Halterung von Stützfüßen eines Dachlastenträgers, welche durch mittels eines Schiebers verschließbare Öffnungen in der Abdeckleiste hindurchgreifen, wobei die der Rinne abgewandte Außenfläche des Schiebers in der Verschlußstellung mit der Außenfläche der Abdeckleiste im wesentlichen flächenbündig abschließt und der Schieber in seiner Öffnungsstellung eine von außen verdeckte Lage unter der Abdeckleiste einnimmt und wobei an der Innenseite des Schiebers Druckfedern zum Andrücken desselben gegen die Abdeckleiste festgelegt sind, dadurch gekennzeichnet, daß der Schieber (1) ein durch Umformen eines Blechzuschnittes gebildetes, einstückiges Preßteil ist und daß in den Endbereichen des Schiebers (1) an der Innenseite im Abstand zur Innenfläche, oder diese kontaktierend, zwei von den Längsseiten aus sich erstreckende Befestigungslaschen (13, 14) für die freien Enden der Druckfedern (12) vorgesehen sind.

2. Abdeckleiste nach Anspruch 1, dadurch gekennzeichnet, daß jede Befestigungslasche (13, 14) zur Bildung eines Klemmsteges (17) für die Druckfeder (12) zwei von den einander zugewandten Kanten in Richtung zu den Längskanten (5, 6) des Schiebers (1) sich erstreckende, sowie parallel und im Abstand zueinander angeordnete Einschnitte (15, 16) aufweist.

3. Abdeckleiste nach Anspruch 2, dadurch gekennzeichnet, daß jeder Klemmsteg (17) bogenförmig ausgebildet ist und gegenüber der Ebene der Befestigungslasche (13, 14) vorzugsweise zu der der Außenfläche des Schiebers (1) angewandten Seite vorsteht.

## Claims

1. Cover strip for a channel recessed into a vehicle roof and intended for receiving and holding supporting feet of a roof-rack, which feet engage through openings in the cover strip, which openings can be closed by means of a slide, the outer surface, facing away from the channel, of the slide terminating in the closure position essentially flush with the outer surface of the cover strip, and in its opening position the slide adopting a position concealed from the outside under the cover strip, and there being secured on the inside of the slide pressure springs for pressing the latter against the cover strip, characterized in that the slide (1) is a one-piece pressed part formed by forming a sheet-metal blank and in that in the end regions of the slide (1), on the inside at a distance from the inner surface, or in contact with the latter, there are provided two attachment tabs (13, 14) which extend from the longitudinal sides and are intended for the free ends of the pressure springs (12).

2. Cover strip according to Claim 1, characterized in that for the formation of a clamping web (17) for the pressure springs (12), each attachment tab (13, 14) has two recesses (15, 16), which extend from those edges which face one another towards the longitudinal edges (5, 6) of the slide (1) and are arranged parallel and at a distance from each other.

3. Cover strip according to Claim 2, characterized in that each clamping web (17) is of arcuate design and, relative to the plane of the attachment tab (13, 14), preferably protrudes towards that side which faces away from the outer surface of the slide (1).

## Revendications

1. Baguette couvre-joint pour une gouttière encastrée dans un toit de véhicule, destinée à recevoir et à maintenir des pieds de support d'un porte-bagages de toiture, ces pieds traversant des ouvertures dans la baguette couvre-joint susceptibles d'être refermées au moyen d'un coulisseau, la surface extérieure du coulisseau détournée de la gouttière se raccordant sensiblement en affleurement avec la surface extérieure de la baguette couvre-joint dans la position de fermeture, et le coulisseau occupant dans sa position d'ouverture une position cachée depuis l'extérieur en-dessous de la baguette couvre-joint, des ressorts de compression étant fixés sur la face intérieure du coulisseau afin de repousser celui-ci contre la baguette couvre-joint, caractérisée en ce que le coulisseau (1) est une pièce réalisée par pressage d'une seule pièce par déformation d'un flan de tôle, et en ce que dans les régions terminales du coulisseau (1) sont prévues deux pattes de fixation (13, 14) pour les extrémités libres des ressorts de compression (12), ces pattes de fixation étant sur le côté intérieur et à distance de la surface intérieure ou en contact avec celle-ci, et s'étendant depuis les côtés longitudinaux.

2. Baguette couvre-joint selon la revendication 1, caractérisée en ce que pour former une barrette de serrage (17) pour les ressorts de compression (12), chaque patte de fixation (13, 14) comporte deux découpes qui s'étendent depuis les arêtes dirigées l'une vers l'autre en direction des arêtes longitudinales (5, 6) du coulisseau (1), et qui sont agencées parallèlement et à distance l'une de l'autre.

3. Baguette couvre-joint selon la revendication 2, caractérisée en ce que chaque barrette de serrage (17) est réalisée en forme d'arc et dépasse par rapport au plan des pattes de fixation (13, 14), de préférence vers le côté orienté vers la surface extérieure du coulisseau (1).
